# FASCICULE DE BREVET EUROPEEN

(11) **EP 0 580 501 B1**
(45) Date de publication et mention de la délivrance du brevet: **11.09.1996**
(21) Numéro de dépôt: 93401871.4
(22) Date de dépôt: 20.07.1993
(51) Int. Cl.: B01D 35/30

(54) **Perfectionnements aux boîtiers pour filtres à liquide**
Flüssigkeitsfiltergehäuse
Housing for liquid filters

(30) Priorité: 23.07.1992 FR 9209099
(43) Date de publication de la demande: 26.01.1994
(73) Titulaire: FILTRAUTO, F-78180 Montigny le Bretonneux (FR)
(72) Inventeur: L'Alloret, Pierre, F-HAM 95000 Cergy (FR); Caunet, Guy, F-94400 Vitry Sur Seine (FR); Legrand, Guy, F-78990 Elancourt (FR)
(74) Mandataire: Jacquelin, Marc-Henri

(56) Documents cités:
- WO-A-84/02117
- DE-A- 3 405 105
- GB-A- 2 130 912
- US-A- 3 746 171
- US-A- 3 860 136
- US-A- 4 215 790

## Description

L'invention est relative aux boîtiers destinés à recevoir des cartouches filtrantes pour liquide de façon amovible en vue de leur remplacement après usure ou colmatage, lesdits boîtiers comprenant à cet effet une cuve cylindrique et un couvercle propre à être monté sur cette cuve et à être démonté de façon à livrer passage aux cartouches, les fonds desdites cuves, évidés par les orifices d'admission et d'évacuation du liquide, étant agencés de façon telle que ces cuves puissent être montées de façon réversible sur des supports appropriés par des vissages et dévissages de ces fonds sur ces supports, commandés en exerçant des couples sur les couvercles.

Avec les boîtiers de ce genre, il est intéressant de pouvoir procéder de l'une ou l'autre des deux façons suivantes :
- lorsque le couvercle est monté sur la cuve, sa solidarisation angulaire avec cette cuve doit être solidement réalisée pour que les couples de vissage et dévissage alors exercés sur le couvercle, dans l'un ou l'autre des deux sens possibles, généralement à l'aide d'une clé coopérant avec un bossage ou creux à six pans constituant le centre du couvercle, soient intégralement transmis à la cuve et ce sans qu'il y ait risque de démontage du couvercle,
- ce démontage du couvercle doit pouvoir être obtenu facilement par une commande à la main, et sans que cette commande ait de répercussion sur le montage vissé de la cuve sur son support.

Dans les modes de réalisation connus de ces boîtiers, les deux fonctions ci-dessus ne sont pas nettement séparées ou l'obtention indépendante de ces deux fonctions exige le recours à des moyens spéciaux assurant notamment le blocage angulaire entre la cuve et son support en fin de vissage.

L'invention a pour but, surtout, de rendre possibles automatiquement les deux fonctions ci-dessus décrites à l'aide de moyens particulièrement simples, robustes et faciles à mettre en oeuvre.

A cet effet, les boîtiers du genre en question selon l'invention sont essentiellement caractérisés :
- en ce que le bord de la cuve cylindrique destiné à recevoir le couvercle est évidé par au moins une encoche axiale et prolongé par un rebord discontinu constitué d'une pluralité de tronçons faisant saillie radialement vers l'extérieur,
- en ce que le couvercle est essentiellement constitué par un disque délimité extérieurement par un anneau périphérique dimensionné de façon à recouvrir axialement le rebord discontinu de la cuve, ce disque étant raccordé, le long du bord intérieur de l'anneau, à une jupe cylindrique dimensionnée de façon à être introduite avec un faible jeu à l'intérieur du bord de la cuve, la face, de l'anneau, tournée du côté de la jupe, étant garnie d'au moins un ergot propre à être introduit jointivement dans l'encoche évidée dans ledit bord,
- en ce qu'il est prévu en outre, d'une part, une bague folle enveloppant en permanence l'anneau du couvercle et propre à coiffer le rebord discontinu de la cuve et prolongée, du côté de la cuve, par des rabats ou pans rabattus transversalement vers l'axe de la bague, rabats agencés de façon à coopérer à la façon d'un montage "en baïonnette" avec les tronçons constituant le rebord discontinu de la cuve et, d'autre part, une rondelle élastique interposée en permanence entre la bague et le couvercle de façon à solliciter à l'écartement axial mutuel la bague et le couvercle,
- et en ce que l'un au moins des tronçons constitutifs du rebord discontinu de la cuve comprend un bossage faisant saillie axialement sur ce tronçon et propre à coopérer, aux fins de blocage angulaire de la bague sur le couvercle, avec un creux complémentaire prévu dans un rabat de la bague.

Dans des modes de réalisation préférés, on a recours en outre à l'une et/ou à l'autre des dispositions suivantes :
- des moyens de détrompage, prévus sur le couvercle, permettent d'indexer angulairement les rabats de la bague par rapport aux ergots du couvercle tant que le couvercle n'est pas mis en place sur la cuve,
- les moyens de détrompage ci-dessus sont des plots faisant saillie axialement sur la face, de l'anneau périphérique du couvercle, tournée vers la jupe,
- les plots ci-dessus sont au nombre de deux et encadrent angulairement un ergot,
- chacun des tronçons constitutifs du rebord discontinu de la cuve comprend à l'une de ses extrémités une rampe facilitant le début du glissement contre lui d'un rabat de la bague,
- l'un au moins des tronçons constitutifs du rebord discontinu de la cuve est prolongé par une patte s'étendant parallèlement à l'axe de la cuve et formant butée de fin de course pour le déplacement angulaire du rabat, de la bague, qui enveloppe le tronçon considéré.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant aux dessins ci-annexés d'une manière bien entendu non limitative.

La figure 1, de ces dessins, montre très schématiquement un boîtier de filtre à liquide établi selon l'invention.

La figure 2 montre en vue perspective éclatée partielle un tel boîtier.

La figure 3 montre également en vue perspective partielle le même boîtier avec le couvercle monté sur la cuve.

La figure 4 est une coupe partielle de la portion montrée sur la figure 3.

D'une façon générale, l'invention concerne un boîtier 1 destiné à recevoir de manière amovible des cartouches filtrantes 2 pour liquide, ces cartouches étant notamment destinées à filtrer l'huile de lubrification d'un moteur à combustion interne de véhicule.

Lesdites cartouches sont en général constituées par un élément filtrant cylindrique 3 en papier plissé délimité à ses deux extrémités par des flasques 4,5 dont l'un au moins est percé en son centre en 6.

Pour rendre possible et facile l'amovibilité des cartouches 2, on constitue le boîtier 1 par une cuve cylindrique 7 sur laquelle est monté un couvercle 8, le montage de ce couvercle étant prévu de façon telle qu'il puisse être très facilement dégagé de la cuve.

D'une façon connue en soi, le fond du boîtier 1 est évidé par un alésage fileté central 9 et par une couronne d'orifices 10 entourant cet alésage : ce dernier est destiné à coopérer par vissage avec un embout fileté extérieurement 11 compris par un support 12 tel qu'un carter de moteur de véhicule.

Le montage du boîtier 1 sur le support 12 se fait par vissage de l'alésage fileté 9 sur l'embout 11, ce vissage s'accompagnant de l'écrasement d'un joint d'étanchéité annulaire 13 entre le boîtier 1 et le support 12.

Ledit vissage est généralement obtenu en exerçant un couple sur le boîtier, à l'aide d'une clé appropriée, au niveau d'un bossage ou creux 14 à six pans prévu au milieu du couvercle 8.

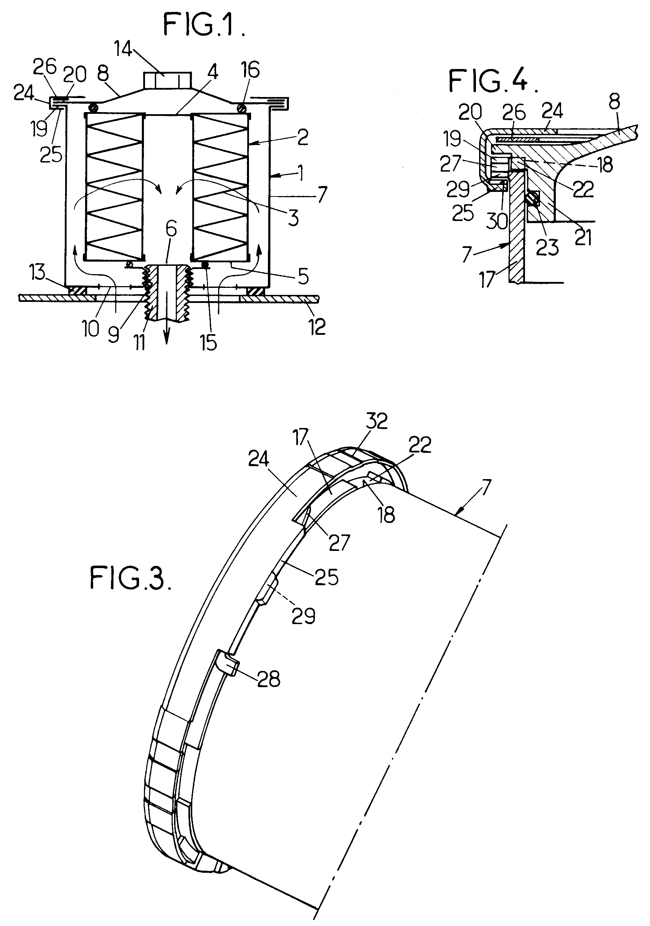

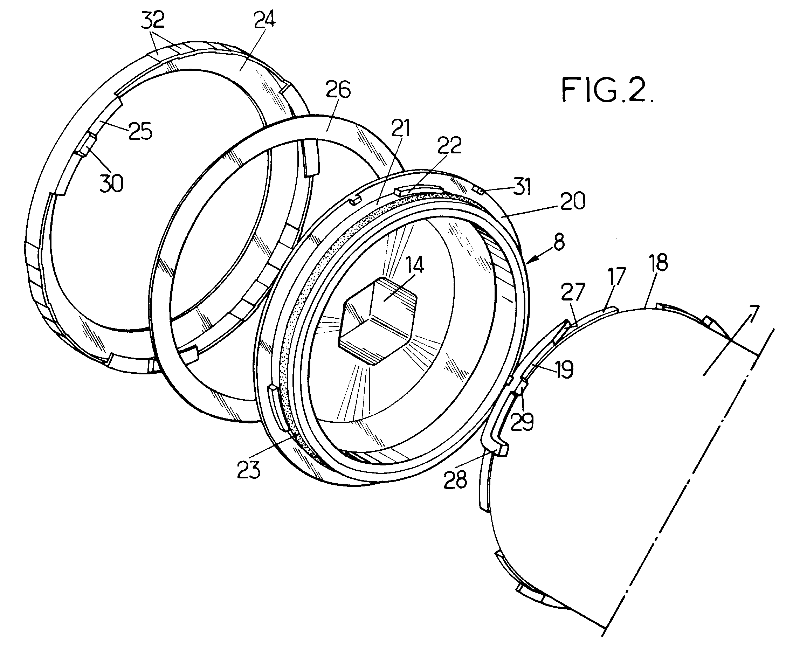

On voit encore sur la figure 1 des joints d'étanchéité annulaires 15,16, prévus entre les flasques de la cartouche filtrante 2 et des portées appropriées du boîtier.

Le trajet du liquide est représenté par des flèches : le liquide à filtrer est admis à travers les orifices 10, puis après filtration par traversée radiale centripète de l'élément filtrant 3, le liquide filtré est évacué axialement à travers l'embout fileté 11.

L'invention concerne ici plus spécialement le montage amovible du couvercle 8 sur la cuve 7.

Comme indiqué ci-dessus, on cherche ici à rendre ce couvercle facilement démontable à la main sans que soit remis en cause le montage vissé de la cuve 1 sur l'embout 11.

A cet effet :
- le bord 17 (figures 2 et 3), de la cuve 7, qui est destiné à recevoir le couvercle est évidé par trois encoches axiales 18 et il est prolongé par un rebord discontinu faisant saillie radialement vers l'extérieur et comprenant trois tronçons ou redans 19,
- le couvercle 8 est composé essentiellement d'un disque généralement bombé vers l'extérieur du boîtier, disque délimité à sa périphérie par un anneau plat 20 dimensionné de façon à recouvrir axialement les redans 19 et ce disque est raccordé, au niveau de la limite intérieure dudit anneau 20, à une jupe cylindrique 21 dimensionnée de façon à être introduite avec un faible jeu dans le bord 17 de la cuve, la face dudit anneau, tournée vers la jupe, comprenant trois ergots 22 propres à être introduits selon la direction axiale et sans jeu angulaire dans les encoches 18 et l'étanchéité entre la jupe et la cuve étant obtenue à l'aide d'un joint torique 23 logé dans une gorge annulaire évidée dans la face cylindrique extérieure de ladite jupe,
- en outre une bague folle 24 enveloppant en permanence avec jeu l'anneau 20 du couvercle 8 et propre à envelopper jointivement les trois redans 19 de la cuve est prolongée, du côté de la cuve, par trois rabats 25 ou pans rabattus transversalement vers l'axe de la bague, ces rabats étant agencés de façon à coopérer à la façon d'un montage en baïonnette avec les redans 19,
- enfin une rondelle élastique 26 est interposée en permanence entre la bague 24 et l'anneau 20 du couvercle de façon à solliciter constamment à l'écartement axial ladite bague par rapport audit couvercle.

Les encoches, ergots, redans et rabats, qui sont tous ici au nombre de trois, sont décalés mutuellement de 120 degrés autour de l'axe du boîtier.

Ce nombre de trois n'est pas limitatif : il pourrait être en particulier de deux ou de quatre, les décalages angulaires correspondants étant alors de 180 degrés ou de 90 degrés.

Le montage en baïonnette des rabats 25 sur les redans 19 est facilité en faisant comprendre à une extrémité de chaque tronçon 19 une portion chanfreinée ou rampe 27.

L'autre extrémité de l'un au moins de ces redans 19 est terminée par une patte 28 rabattue longitudinalement, contre laquelle vient buter angulairement l'extrémité du rabat 25 correspondant en fin de course.

Pour éviter un démontage involontaire de la bague, c'est-à-dire conférer un petit degré d'irréversibilité au montage en baïonnette, on marque cette fin de course par introduction axiale d'un petit bossage 29 prévu sur chaque redan 19 dans un creux 30, alors disposé en regard, du rabat 25 concerné.

Pour faciliter les montages du couvercle, qui vont être décrits ci-après, on prévoit en outre avantageusement sur la face, de l'anneau 20, tournée vers la jupe 21, des plots d'indexation 31 permettant de maintenir angulairement entre eux l'un des rabats 25 (ce qui n'est pas le cas sur la figure 2) lorsque le couvercle est démonté.

On voit encore sur les figures 2 et 3 des crans 32 prévus sur la bague 24 pour permettre une bonne prise en main de celle-ci.

Le montage du couvercle 8 qui vient d'être décrit sur le bord 17 de la cuve 7 est effectué de la façon suivante.

On prend en main la bague 24 qui porte le couvercle 8 et la rondelle 26.

On oriente angulairement ladite bague de façon telle que chacun des ergots 22 se trouve axialement en regard d'une encoche 18, ce qui place angulairement chaque rabat 25 du couvercle entre deux redans successifs 19 de la cuve.

On introduit alors axialement la jupe 21 dans la cuve, et chaque ergot 22 dans l'encoche 18 en regard, en poussant axialement la bague 24 à l'encontre de l'effort de rappel de la rondelle élastique 26.

On fait alors tourner la bague 24 dans le sens pour lequel chaque rabat 25 vient envelopper un redan 19, le début de chaque enveloppement pouvant être aidé par glissement de la tranche d'attaque de chaque rabat 25 contre la rampe 27 concernée.

Ce déplacement angulaire du couvercle 23 est poursuivi jusqu'à butée de l'une au moins des tranches ci-dessus contre la butée 28.

Il suffit alors de lâcher la bague 24 pour que la détente élastique de la rondelle 26 se traduise par un chevauchement de chacun des bossages 29 par un creux 30.

Le montage du couvercle 8 sur la cuve 7 est alors achevé.

L'élasticité de la rondelle 26 est suffisante pour rendre ledit montage suffisamment irréversible pour éviter les démontages involontaires du couvercle.

Pour démonter ce couvercle, il suffit de procéder à la suite d'opérations inverses de celle précédemment décrite.

En d'autres termes, on commence par repousser axialement la bague 24 en direction de la cuve 7, ce qui dégage les bossages 29 des creux 30 et rend possible un déplacement angulaire de la bague en sens inverse du précédent.

Dès que ce déplacement est suffisant pour avoir décalé complètement les rabats 25 par rapport aux redans 19, on peut dégager axialement l'ensemble constitué par la bague 23 et les pièces 3 et 26 qu'elle porte, ce qui sépare complètement le couvercle 8 de la cuve 7.

Il est à noter que cette opération de démontage du couvercle 8 ne fait intervenir que des couples manuels extrêmement faibles appliqués sur la bague 24, vu le montage "fou" de cette bague sur le couvercle 8, et que ces couples ne sont aucunement appliqués sur le couvercle 8 lui-même : lesdits couples ne sont donc absolument pas de nature à intervenir sur le degré de vissage de la cuve 7 sur son support.

En suite de quoi, et quel que soit le mode de réalisation adopté, on obtient finalement un boîtier pour filtre à liquide dont la constitution, la mise en oeuvre et les avantages résultent suffisamment de ce qui précède.

## Revendications

1. Boîtier pour cartouche filtrante (2), comprenant une cuve cylindrique (7) dont le fond est vissable sur un support (11) et un couvercle amovible (8), caractérisé en ce que le bord (17) de la cuve est évidé par au moins une encoche axiale (18) et prolongé par un rebord discontinu constitué d'une pluralité de tronçons (19) faisant saillie radialement vers l'extérieur, en ce que le couvercle est essentiellement constitué par un disque délimité extérieurement par un anneau périphérique (20) dimensionné de façon à recouvrir axialement le rebord discontinu de la cuve, ce disque étant raccordé, le long du bord intérieur de l'anneau, à une jupe cylindrique (21) dimensionnée de façon à être introduite avec un faible jeu à l'intérieur du bord (17) de la cuve, la face, de l'anneau, tournée du côté de la jupe, étant garnie d'au moins un ergot (22) propre à être introduit jointivement dans l'encoche axiale (18) évidée dans ledit bord, en ce qu'il comprend en outre, d'une part, une bague folle (24) enveloppant en permanence l'anneau du couvercle et propre à coiffer le rebord discontinu de la cuve et prolongée, du côté de la cuve, par des rabats (25) agencés de façon à coopérer à la façon d'un montage "en baïonnette" avec les tronçons (19) constituant le rebord discontinu de la cuve et, d'autre part, une rondelle élastique (26) interposée en permanence entre la bague et le couvercle de façon à solliciter à l'écartement axial mutuel la bague et le couvercle, et en ce que l'un au moins des tronçons (19) constitutifs du rebord discontinu de la cuve comprend un bossage (29) faisant saillie axialement sur ce tronçon et propre à coopérer, aux fins de blocage angulaire de la bague sur le couvercle, avec un creux complémentaire (30) prévu dans un rabat (25) de la bague.

2. Boîtier selon la revendication 1, caractérisé en ce que des moyens de détrompage (31), prévus sur le couvercle (8) permettent d'indexer angulairement les rabats (25) de la bague (24) par rapport aux ergots (22) du couvercle tant que le couvercle n'est pas mis en place sur la cuve (7).

3. Boîtier selon la revendication 2, caractérisé en ce que les moyens de détrompage sont des plots (31) faisant saillie axialement sur la face, de l'anneau périphérique (20) du couvercle, tournée vers la jupe (21).

4. Boîtier selon l'une quelconque des précédentes revendications, caractérisé en ce que chacun des tronçons (19) constitutifs du rebord discontinu de la cuve comprend à l'une de ses extrémités une rampe (27) facilitant le début du glissement contre lui d'un rabat (25) de la bague.

5. Boîtier selon l'une quelconque des précédentes revendications, caractérisé en ce que l'un au moins des tronçons (19) constitutifs du rebord discontinu de la cuve est prolongé par une patte (28) s'étendant parallèlement à l'axe de la cuve (7) et formant butée de fin de course pour le déplacement angulaire du rabat (25), de la bague (24), qui enveloppe le tronçon considéré.

## Claims

1. Housing for a filter cartridge (2), comprising a cylindrical vessel (7) whose bottom is able to be screwed onto a support (11) and a removable cover (8), characterised in that the edge (17) of the vessel has at least one axial recess (18) and is extended by a discontinuous rim formed by a plurality of sections (19) projecting radially outwards, in that the cover consists essentially of a disc delimited externally by a peripheral annulus (20) sized so that it axially covers the discontinuous rim of the vessel, this disc being connected, along the inner edge of the annulus, to a cylindrical skirt (21) sized so as to be inserted with a small clearance inside the edge (17) of the vessel, the face of the annulus turned towards the skirt being provided with at least one pin (22) suitable for being inserted contiguously into the axial recess (18) formed in the said edge, in that it also comprises, firstly, a loose ring (24) permanently enveloping the annulus of the cover and suitable for covering the discontinuous rim of the vessel and extended, on the vessel side, by lugs (25) arranged so as to cooperate in the fashion of a "bayonet" mounting with the sections (19) constituting the discontinuous rim of the vessel and, on the other hand, an elastic washer (26) permanently interposed between the ring and cover so as to push mutually the ring and cover axially away from each other, and in that at least one of the sections (19) constituting the discontinuous rim of the vessel comprises a projection (29) projecting axially on this section and suitable for cooperating, for the purpose of the angular locking of the ring on the cover, with a complementary hollow (30) provided in a lug (25) on the ring.

2. Housing according to Claim 1, characterised in that locating means (31) provided on the cover (8) enable the lugs (25) on the ring (24) to be located angularly with respect to the pins (22) on the cover so long as the cover is not put in place on the vessel (7).

3. Housing according to Claim 2, characterised in that the locating means are studs (31) projecting axially on the face, of the peripheral ring (20) of the cover, which is turned towards the skirt (21).

4. Housing according to any one of the preceding claims, characterised in that each of the sections (19) constituting the discontinuous rim of the vessel comprises at one of its ends a ramp (27) facilitating the start of the sliding against it of a lug (25) on the ring.

5. Housing according to any one of the preceding claims, characterised in that at least one of the sections (19) constituting the discontinuous rim of the vessel is extended by a finger (28) extending parallel to the axis of the vessel (7) and forming an end-of-travel stop for the angular movement of the lug (25), on the ring (24), which envelops the section in question.

## Patentansprüche

1. Behälter für eine Filterpatrone (2), bestehend aus einem zylindrischen Topf (7), dessen Boden auf eine Unterlage (11) aufschraubbar ist, und einem abnehmbaren Deckel (8), dadurch gekennzeichnet, daß der Rand (17) des Topfes mit wenigstens einer axialen Ausnehmung (18) versehen und durch eine unterbrochene Randleiste, die aus mehreren Abschnitten (19) besteht, verlängert ist, die in radialer Richtung nach außen vorstehen, daß der Deckel im wesentlichen aus einer Scheibe besteht, die außen durch einen peripherischen Ring (20) begrenzt wird, der so dimensioniert ist, daß er die unterbrochene Randleiste des Topfes axial überdeckt, wobei die Scheibe längs des inneren Randes des Ringes mit einem zylindrischen Mantel (21) verbunden ist, der so dimensioniert ist, daß er mit geringem Spiel in das Innere des Randes (17) des Topfes einsetzbar ist, wobei die Oberfläche des Ringes auf der dem Topf zugewandten Seite mit wenigstens einem Vorsprung (22) versehen ist, der dicht in die axiale Ausnehmung (18) eingesetzt werden kann, die in dem Rand ausgenommen ist, daß der Behälter ferner einerseits einen losen Ring (24), der den Ring des Deckels dauernd umgibt und die unterbrochene Randleiste des Topfes überdecken kann und der auf der Seite des Topfes durch umgebogene Abschnitte (25) verlängert ist, die so ausgebildet sind, daß sie nach Art eines Bajonettverschlusses mit den Abschnitten (19) zusammenwirken, die die unterbrochene Randleiste des Topfes bilden, und andererseits eine elastische Ringscheibe (26) enthält, die dauernd zwischen dem Ring und dem Deckel eingelegt ist, derart, daß sie den Ring und den Deckel in einem gegenseitigen axialen Abstand voneinander hält, und daß wenigstens einer der Abschnitte (19), die die unterbrochene Randleiste des Topfes bilden, eine Verdickung (29) enthält, die in axialer Richtung an dem Abschnitt vorsteht und die zum Zwecke der winkligen Verriegelung des Ringes an dem Deckel mit einem komplementären Hohlraum (30) zusammenwirken kann, der an einem umgebogenen Abschnitt (25) des Ringes vorgesehen ist.

2. Behälter nach Anspruch 1, dadurch gekennzeichnet, daß an dem Deckel (8) Mittel (31) vorgesehen sind, mit denen die Winkelstellung der umgebogenen Abschnitte (25) des Ringes (24) in bezug auf Vorsprünge (22) des Deckels erkennbar ist, wenn der Deckel nicht auf dem Topf (7) aufliegt.

3. Behälter nach Anspruch 2, dadurch gekennzeichnet, daß die Mittel aus Blöcken (31) bestehen, die axial gegenüber der Oberfläche des peripherischen Ringes (20) des Deckels vorstehen, die dem Mantel (21) zugewandt ist.

4. Behälter nach einem der vorhergehenden Ansprüche, dadurch gekennzeichnet, daß alle Abschnitte (19), die die unterbrochene Randleiste des Behälters bilden, an einem ihrer Enden eine Rampe (27) aufweisen, die das anfängliche Verschieben eines umgebogenen Abschnittes (25) des Ringes an dieser erleichtern.

5. Behälter nach einem der vorhergehenden Ansprüche, dadurch gekennzeichnet, daß wenigstens einer der Abschnitte (19), die die unterbrochene Randleiste des Topfes bilden, durch einen Haken (28) verlängert ist, der sich parallel zur Achse des Topfes (7) erstreckt und einen Endanschlag für die Winkelverschiebung des umgebogenen Abschnittes (25) des Ringes (24) bildet, der den entsprechenden Abschnitt umgibt.
